# FASCICULE DE BREVET EUROPEEN

(11) **EP 1 816 374 B1**
(45) Date de publication et mention de la délivrance du brevet: **11.11.2009**
(21) Numéro de dépôt: 07356015.3
(22) Date de dépôt: 05.02.2007
(51) Int. Cl.: F16H 1/32, B23B 35/00, B25J 9/10

(54) **Procédé de fabrication d'un réducteur, réducteur et robot incorporant un tel réducteur**
Verfahren zur Herstellung eines Reduktionsgetriebes, Reduktionsgetriebe und Roboter, der ein solches Reduktionsgetriebe beinhaltet
Method of manufacturing a reducer, reducer and robot including such a reducer

(30) Priorité: 06.02.2006 FR 0601032
(43) Date de publication de la demande: 08.08.2007
(73) Titulaire: STAUBLI FAVERGES, 74210 FAVERGES (FR)
(72) Inventeur: Gerat, Vincent, 74410 Saint Jorioz (FR); Mariotte, Pascal, 74290 Menthon Saint Bernard (FR)
(74) Mandataire: Myon, Gérard Jean-Pierre

(56) Documents cités:
- EP-A- 0 305 535
- US-A- 5 312 305

## Description

L'invention a trait à un procédé de fabrication d'un réducteur épicycloïdal ainsi qu'à un réducteur pouvant être obtenu par ce procédé. L'invention a également trait à un robot équipé d'un tel réducteur.

Pour l'actionnement angulaire d'un bras de robot ou d'autres manipulateurs, il est connu d'utiliser un réducteur épicycloïdal, parfois dénommé réducteur « cycloïdal », afin de transmettre le mouvement de l'arbre de sortie d'un moteur à une partie mobile du robot, avec réduction de la vitesse angulaire de ce mouvement.

Il est connu de EP-A-0 543 754 qui divulgue les caractéristiques du préambule des revendications 1 et 6 et de US-A-4,898,065 de prévoir un tel réducteur avec deux cames excentrées par rapport à un axe longitudinal de l'arbre d'entrée du réducteur, ces cames étant chacune pourvues d'une denture destinée à coopérer avec une denture intérieure d'une couronne fixe. Ces cames reçoivent, dans des orifices adaptés, des doigts d'actionnement solidaires d'un support solidaire d'un plateau tournant de sortie du réducteur. La qualité d'un tel réducteur dépend de la précision du positionnement des cames et de leur interaction avec les doigts d'actionnement. Pour répondre à ce problème de positionnement, EP-A-0 543 754 prévoit que chaque doigt est monté avec un jeu permettant son auto-centrage dans le logement correspondant. Pour être efficace, un tel auto-centrage doit, en pratique, être réalisé lors d'une mise en mouvement du réducteur, afin que chaque doigt parvienne dans une position la plus adaptée. Un tel réglage est délicat et laisse une grande part à l'appréciation de l'opérateur.

C'est à ces inconvénients qu'entend plus particulièrement remédier l'invention, en proposant un procédé de fabrication d'un réducteur épicycloïdal qui permet un centrage précis de la ou des cames du réducteur sur le ou les doigts d'actionnement correspondant, sans nécessiter d'intervention complexe de la part de l'opérateur lors de l'assemblage du réducteur.

A cet effet, l'invention concerne un procédé de fabrication d'un réducteur épicycloïdal qui comprend au moins une came circulaire dont le bord périphérique externe est pourvu d'une première denture apte à coopérer avec une deuxième denture fixe dont le nombre de dents est différent de celui de la première denture, cette came étant percée d'au moins un premier alésage de réception d'un doigt d'actionnement immobilisé dans un deuxième alésage, lui-même ménagé dans un support solidaire d'un arbre de sortie du réducteur. Ce procédé est caractérisé en ce qu'il comprend une étape consistant à :
a) - usiner au moins partiellement dans une même opération le premier alésage de la came et le deuxième alésages du support, en alignement l'un de l'autre.

Grâce à l'usinage des premier et deuxième alésages au cours d'une même opération, ces alésages peuvent être précisément alignés, de sorte qu'un doigt immobilisé dans l'alésage du support est automatiquement positionné de façon optimale par rapport à l'alésage de la ou de chaque came.

Selon des aspects avantageux mais non obligatoires de l'invention, un tel procédé peut incorporer une ou plusieurs des caractéristiques suivantes :
- il comprend une étape b) consistant à plaquer la came contre le support préalablement à l'étape a) et une étape c) consistant à soumettre la came et le support ainsi plaqués l'un contre l'autre à un effort de bridage, au moins pendant l'étape a),
- au cours de l'étape c) la came et le support sont en appui surfacique dans la zone où sont usinés les alésages, et, éventuellement, deux cames adjacentes sont en appui surfacique dans cette zone,
- lors de l'étape a), les alésages sont usinés au même diamètre,
- lorsque ce procédé est utilisé pour la fabrication d'un réducteur comprenant plusieurs cames pourvues chacune d'au moins un premier alésage, les premiers alésages de toutes les cames sont usinés avec le deuxième alésage correspondant du support lors de l'étape a).

L'invention concerne également un réducteur épicycloïdal pouvant être fabriqué grâce au procédé précédemment décrit et qui comprend au moins une came circulaire dont le bord périphérique externe est pourvu d'une première denture apte à coopérer avec une deuxième denture fixe dont le nombre de dents est différent de celui de la première denture, cette came étant percée d'au moins un premier alésage de réception d'un doigt d'actionnement immobilisé dans un deuxième alésage ménagé dans un support solidaire d'un arbre de sortie du réducteur. Ce réducteur est caractérisé en ce que les premier et deuxième alésages prévus respectivement dans la came et le support ont des diamètres identiques.

Le réducteur de l'invention permet donc un montage précis et rapide des doigts d'actionnement.

Selon des aspects avantageux mais non obligatoires de l'invention, un tel réducteur peut incorporer une ou plusieurs des caractéristiques suivantes :
- le doigt d'actionnement est étagé et comprend deux parties de diamètres différents, une première partie ayant un diamètre sensiblement égal au diamètre des alésages et étant reçue dans un alésage du support, alors qu'une deuxième partie de diamètre inférieur au diamètre de la première partie est reçue dans un alésage de la ou de chaque came,
- le réducteur comprend au moins deux cames excentrées en opposition par rapport à l'axe de l'arbre d'entrée du réducteur, alors que le diamètre des alésages est sensiblement égal à la somme du diamètre de la deuxième partie du doigt et de deux fois l'excentration des cames,
- la ou chaque came est percée de plusieurs alésages répartis autour de son axe de rotation autour de l'arbre d'entrée du réducteur, alors que chaque alésage reçoit un doigt d'actionnement immobilisé sur le support et qu'une couronne est solidaire en rotation des extrémités des doigts opposées au support,
- le ou chaque doigt d'actionnement est immobilisé sur le support au moyen d'une vis qui s'étend selon l'axe longitudinal de ce doigt et qui est vissée dans le support ou dans une pièce solidaire de celui-ci.

L'invention concerne enfin un robot qui comprend une partie mobile entraînée par un moteur au moyen d'un réducteur tel que décrit ci-dessus. Un tel robot est plus fiable et plus économique que ceux de l'état de la technique.

L'invention sera mieux comprise et d'autres avantages de celle-ci apparaîtront plus clairement à la lumière de la description qui va suivre d'un réducteur conforme à l'invention et de son procédé de fabrication, donnée uniquement à titre d'exemple et faite en référence aux dessins annexés dans lesquels :
- la figure 1 est une coupe axiale de principe d'un réducteur conforme à l'invention ;
- la figure 2 est une coupe axiale partielle de certains éléments constitutifs du réducteur de la figure 1 lors d'une étape de fabrication de ce réducteur ;
- la figure 3 est une coupe axiale de principe d'un doigt d'actionnement pouvant être utilisé, en variante, dans le réducteur des figures 1 et 2 et
- la figure 4 est une représentation schématique de principe d'un robot conforme à l'invention incorporant, entre autres, le réducteur des figures 1 et 2.

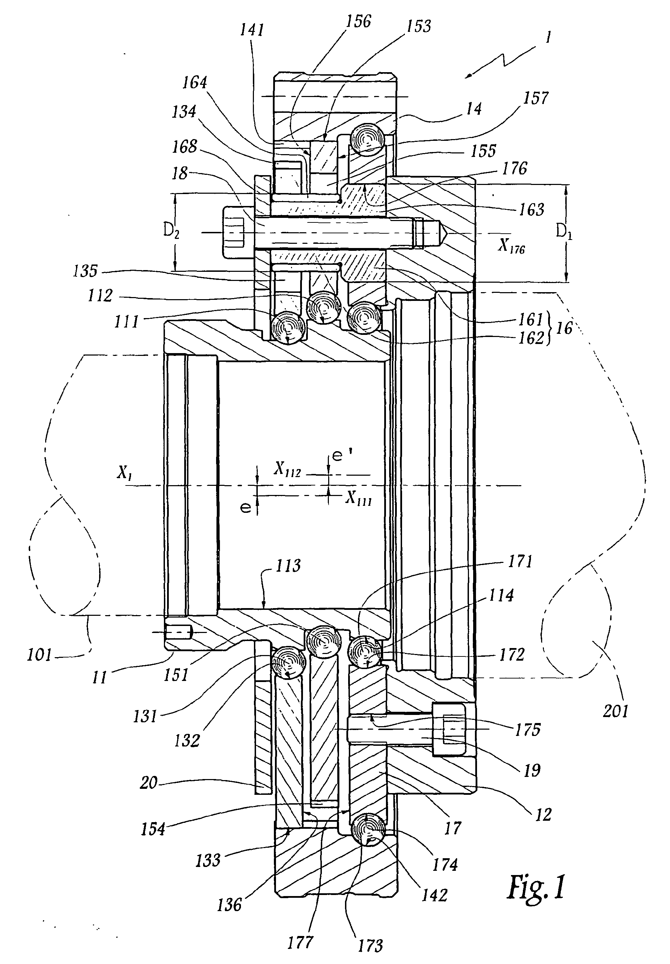

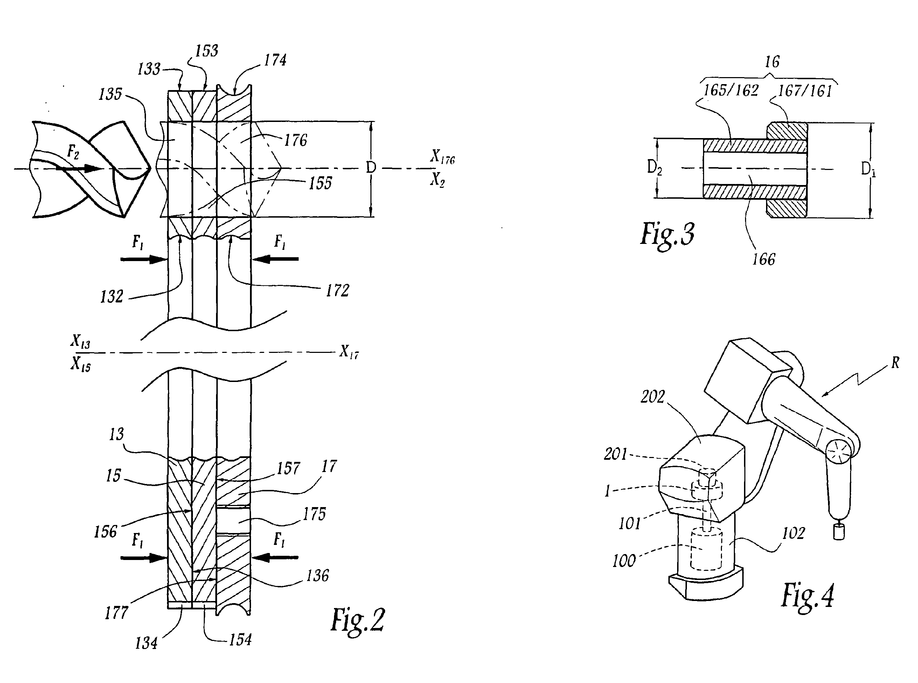

Le réducteur épicycloïdal 1, qui peut également être qualifié de « cycloïdal », représenté à la figure 1 comprend une bride d'entrée 11 centrée sur un axe de rotation qui est également l'axe de rotation d'une bride de sortie 12 du réducteur. La bride 11 est destinée à être solidarisée à l'arbre de sortie 101 d'un moteur électrique 100 prévu dans le segment de base 102 d'un robot multi-axes R représenté à la figure 4. La bride 12 est destinée à être solidarisée avec un arbre 201 d'entraînement en rotation d'une partie 202 du robot R mobile par rapport à sa base.

D'autres réducteurs du même type peuvent être inclus dans le robot R pour transmettre un mouvement de rotation entre d'autres moteurs électriques et d'autres parties mobiles du bras du robot.

La bride 11 forme, en pratique, l'arbre d'entrée du réducteur 1, alors que la bride 12 en forme l'arbre de sortie

La bride 11 est pourvue de deux surfaces de portée externes 111 et 112 formant des pistes de roulement excentrées par rapport à l'axe X₁ autour duquel est centrée la surface interne 113 de la bride 11. La surface 111 est centrée sur un axe X₁₁₁ parallèle à l'axe X₁ et décalée par rapport à celui-ci d'un écart e. La surface 111 est toroïdale, de telle sorte que l'écart e mesure l'excentration de la surface 111 par rapport à l'axe X₁. De la même manière, la surface 112 est toroïdale et centrée sur un axe X₁₁₂ parallèle à l'axe X₁, l'axe X₁₁₂ étant opposé à l'axe X₁₁₁ par rapport à l'axe X₁. En d'autres termes, la valeur de l'excentration e' de la surface 112 par rapport à l'axe X₁ est égale à la valeur de l'excentration e de la surface 111 par rapport à cet axe.

Une première came 13 est disposée autour de la surface 111, avec interposition de billes 131 formant un palier entre la surface 111 et la surface radiale interne 132 de la came 13. La came 13 est annulaire et son bord externe 133 est pourvu de dents qui forment une denture 134 adaptée pour coopérer avec une denture 141 ménagée sur la surface radiale interne d'une couronne fixe 14.

Une seconde came 15 est disposée autour de la surface 112 avec interposition d'un jeu de billes 151 formant palier. Le bord radial externe 153 de la came 15 est pourvu d'une denture 154 qui engrène avec la denture 141.

Le nombre de dents N₂ de la denture 141 est légèrement supérieur, par exemple de une unité, au nombre de dents N₁ des dentures 134 et 154 qui sont identiques.

La came 13 est percée de douze alésages dont les axes sont équidistants sur un cercle dont le centre coïncide avec l'axe de rotation de la came autour de la bride d'entrée 11. Un seul alésage est visible à la figure 1 avec la référence 135. De la même manière, la came 15 est percée de douze alésages, dont un seul est visible avec la référence 155. Ces alésages 135 et 155 sont destinés à être globalement alignés et à recevoir ensemble un doigt d'actionnement 16 solidaire d'un support 17 sur lequel il est monté grâce à une vis 18.

Le support 17 est en forme de plaque annulaire et supporté autour de la bride 11 par un jeu de billes 171 disposé entre la surface radiale interne 172 du support 17 et une surface de portée 114, ménagée sur la surface externe de la bride 11 et centrée sur l'axe X₁.

Un second jeu de billes 173 est intercalé entre la surface radiale externe 174 du support 17 et une surface de portée correspondante 142 de la couronne 14.

Le support 17 est solidarisé à la bride 12 au moyen de douze vis 19 qui coopèrent avec des taraudages 175 ménagés dans le support 17.

Lorsqu'il est immobilisé sur le support 17, chaque doigt d'actionnement 16 est reçu dans un alésage 176 du support 17. Le maintien en place de chaque doigt 16 sur l'ensemble formé du support 17 et de la bride 12 est assuré par l'effort de compression exercé par la vis 18 correspondante.

On note respectivement X₁₃, X₁₅ et X₁₇ les axes centraux des cames 13 et 15 et du support 17. En configuration montée du réducteur 1, les axes X₁₃ et X₁₅ sont les axes de rotation des cames 13 et 15 autour de la bride 11. Ils sont respectivement confondus avec les axes X₁₁₁ et X₁₁₂. De même, dans cette configuration, l'axe X₁₇ est l'axe de rotation du support 17 et il est confondu avec l'axe X₁.

Comme il ressort plus particulièrement de la figure 2, lors de la fabrication du réducteur 1, les deux cames 13 et 15 et le support 17 sont plaqués les uns contre les autres puis soumis à un effort de bridage représenté par les flèches F₁ sur cette figure. Cet effort a pour effet de plaquer une face latérale 136 de la came 13 contre une première face latérale 156 de la came 15 ainsi que l'autre face latérale 157 de cette came 15 contre une face latérale 177 du support 17.

Dans cette configuration bridée des pièces 13, 15 et 17, les axes X₁₃, X₁₅ et X₁₇ sont confondus et les dentures 134 et 154 coïncident, c'est-à-dire ont leurs dents respectives alignées parallèlement aux axes X₁₃, X₁₅ et X₁₇.

Lorsque ces éléments 13, 15 et 17 sont ainsi fermement plaqués les uns contre les autres, on réalise autant de groupes d'alésages 135, 155 et 176 que nécessaire en déplaçant un outil, tel qu'un foret 300, perpendiculairement aux faces 136, 156, 157 et 177, c'est-à-dire parallèlement aux axes X₁₃, X₁₅ et X₁₇ qui sont alors confondus. Le mouvement du foret 300 entre sa position en traits pleins et sa position en traits mixtes est représenté par la flèche F₂ à la figure 2.

De cette manière, les alésages 135, 155 et 176 sont parfaitement alignés sur un axe commun X₂ parallèle aux axes X₁₃, X₁₅ et X₁₇.

Les alésages 135, 155 et 176 réalisés avec le foret 300 ont le même diamètre D.

Après le perçage des alésages 135, 155 et 176, ces alésages peuvent être rectifiés ensemble au diamètre D, voire à un diamètre légèrement supérieur, alors que l'effort de bridage F₁ est maintenu. Les cames 13 et 15 et le support 17 présentent des faces planes 136, 156, 157 et 177 usinées avec précision, de telle sorte que lorsqu'elles sont plaquées les unes contre les autres et soumises à l'effort de bridage F₁, la surface à usiner pour créer les alésages 135, 155 et 176 est quasiment ininterrompue. Les conditions d'usinage sont ainsi homogènes entre les pièces 13, 15 et 17, ce qui garantit une bonne précision.

En d'autres termes, comme les surfaces 136, 156, 157 et 177 sont en appui surfacique dans leurs zones où vont être ménagés les alésages 135, 155 et 176, le foret 300 perce les trois pièces 13, 15 et 17 comme s'il s'agissant d'une seule pièce. De même, un outil peut rectifier les alésages comme s'il s'agissait d'un seul alésage.

Au terme de ces opérations, on repère la position relative des pièces 13, 15 et 17, en particulier leur orientation relative respective autour de l'axe X₁₇.

Ensuite, lorsqu'il convient de monter le réducteur 1, les cames 13 et 15 sont disposées respectivement autour des surfaces 111 et 112 dans une configuration proche de celle utilisée pour les perçages schématisés à la figure 2. Les ensembles d'alésage 135, 155 et 176 réalisés en une opération à l'étape de la figure 2 se retrouvent sensiblement alignés et reçoivent ensemble le même doigt d'actionnement 16.

Pour être fermement immobilisé dans l'alésage 176 correspondant, chaque doigt 16 comprend une première partie 161 de diamètre D₁ sensiblement égal au diamètre D commun aux alésages 135, 155 et 176. Ainsi, par sa mise en place dans l'alésage 176, la partie 161 conduit à un centrage précis du doigt 16 sur l'axe central X₁₇₆ de l'alésage 176.

Le doigt 16 comprend également une seconde partie 162 dont le diamètre D₂ est inférieur au diamètre D₁, de sorte que cette partie D₂ peut être introduite dans les alésages 135 et 155, alors même que ces alésages sont décalés radialement l'un par rapport à l'autre du fait que les pistes ou surfaces 111 et 112 sont excentrées l'une par rapport à l'autre.

En pratique, le doigt 16 est formé d'une pièce massive 163 épaulée percée d'un alésage central de passage de la vis 18 correspondante et qui forme la partie 161, une bague 164 étant installée autour de cette pièce 163 pour former avec elle la partie 162. Le diamètre D₂ est, dans ce cas, le diamètre extérieur de la bague 164.

Toutefois, comme il ressort de la figure 3, chaque doigt 16 peut être formé d'un manchon 165 dont l'alésage central 166 est destiné à recevoir une vis 18, une bague 167 étant rapportée à l'extrémité de manchon pour constituer la partie 161 prévue pour être immobilisée dans le support 17. Dans ce cas, le diamètre D₁ est le diamètre externe de la bague 167, alors que le diamètre D₂ et le diamètre externe du manchon 165 qui forme la partie 162 du doigt 16.

Selon une variante non représentée de l'invention les ébauches des alésages 135, 155 et 176 peuvent être réalisées séparément. Seule l'étape de finition de ces alésages est alors réalisée en une opération, les pièces 13, 15 et 17 étant regroupées et plaquées les unes contre les autres, comme mentionné précédemment.

Dans tous les cas, le diamètre D des alésages 135 et 155 est égal à la somme du diamètre D₂ et de deux fois l'excentricité e. Ainsi, chaque partie 162 d'un doigt 16 est simultanément en appui contre le bord d'un alésage 135 et le bord d'un alésage 155.

Une couronne 20 est disposée autour de la bride 11, à l'opposé du support 17 par rapport à la came 13. Cette couronne 20 est traversée par les douze vis 18 et permet de répartir les efforts entre les extrémités 168 des doigts 16 opposés au support 17. La couronne 20 qui est solidaire en rotation des extrémités 168 des douilles 16 améliore la régularité de la transmission d'effort entre les cames 13 et 15, d'une part, et le support 17, d'autre part.

Selon une variante non représentée de l'invention le support 17 et la bride 12 peuvent être monoblocs, auquel cas les vis 18 sont vissées dans le support.

L'invention a été représentée avec un réducteur comprenant deux cames annulaires 13 et 15. Elle est cependant applicable à un réducteur comprenant une seule telle came ou à un réducteur comprenant trois ou plus de trois cames. En outre, l'invention est applicable indépendamment du nombre exact de doigts 16, pour autant qu'au moins un tel doigt est prévu.

## Revendications

1. Procédé de fabrication d'un réducteur épicycloïdal (1) comprenant au moins une came circulaire (13, 15) dont le bord périphérique externe (133, 153) est pourvu d'une première denture (134, 154) apte à coopérer avec une deuxième denture fixe (141) dont le nombre de dents (N₂) est différent de celui de la première denture (N₁), ladite came étant percée d'au moins un premier alésage (135, 155) de réception d'un doigt d'actionnement (16) immobilisé dans un deuxième alésage (176) ménagé dans un support (17) solidaire d'un arbre de sortie (12) dudit réducteur, **caractérisé en ce qu'**il comprend une étape consistant à :
a) - usiner (F₂) au moins partiellement dans une même opération lesdits premier (135, 155) et deuxième alésages (176) en alignement (X₂) l'un de l'autre.

2. Procédé selon la revendication 1, **caractérisé en ce qu'**il comprend des étapes, consistant à :
b) - plaquer ladite came (13, 15) contre ledit support (17) préalablement à l'étape a) et
c) - soumettre ladite came et ledit support ainsi plaqués l'un contre l'autre à un effort de bridage (F₁) au moins pendant l'étape a).

3. Procédé selon la revendication 2, **caractérisé en ce qu'**au cours de l'étape c) ladite came (15) et ledit support (17) sont en appui surfacique (157/177) dans la zone où sont usinés (F₂) lesdits alésages (135, 155, 176), et, éventuellement, deux cames adjacentes (13, 15) sont en appui surfacique (136/156) dans ladite zone.

4. Procédé selon l'une des revendications précédentes, **caractérisé en ce que**, lors de l'étape a), lesdits alésages (135, 155, 176) sont usinés au même diamètre (D).

5. Procédé selon l'une des revendications précédentes pour la fabrication d'un réducteur comprenant plusieurs cames (13, 15) pourvues chacune d'au moins un premier alésage (135, 155), **caractérisé en ce que**, lors de l'étape a), les premiers alésages (135, 155) de toutes les cames (13, 15) sont usinés avec le deuxième alésage (176) correspondant dudit support (17).

6. Réducteur épicycloïdal (1) comprenant au moins une came circulaire (13, 15) dont le bord périphérique externe (133, 153) est pourvu d'une première denture (134, 154) apte à coopérer avec une deuxième denture fixe (141) dont le nombre de dents (N₂) est différent de celui (N₁) de la première denture, ladite came étant percée d'au moins un premier alésage (135, 155) de réception d'un doigt d'actionnement (16) immobilisé dans un deuxième alésage (176) ménagé dans un support (17) solidaire d'un arbre de sortie (12) dudit réducteur, **caractérisé en ce que** lesdits premier (135, 155) et deuxième (176) alésages ont des diamètres identiques (D).

7. Réducteur selon la revendication 6, **caractérisé en ce que** ledit doigt (16) est étagé et comprend deux parties (161, 162) de diamètres (D₁, D₂) différents, une première partie (161) ayant un diamètre (D₁) sensiblement égal au diamètre (D) desdits alésages (135, 155, 176) et étant reçue dans un alésage (176) dudit support (17), alors qu'une deuxième partie (162), de diamètre (D₂) inférieur au diamètre de la première partie, est reçue dans un alésage (135, 155) de ladite ou de chaque came (13, 15).

8. Réducteur selon la revendication 7, **caractérisé en ce qu'**il comprend au moins deux cames (13, 15) excentrées en opposition par rapport à l'axe (X₁) de l'arbre d'entrée (11) du réducteur et **en ce que** le diamètre (D) desdits alésages (135, 155, 176) est sensiblement égal à la somme du diamètre (D₂) de la deuxième partie (162) dudit doigt (16) et de deux fois l'excentration (e) desdites cames.

9. Réducteur selon l'une des revendications 6 à 8, **caractérisé en ce que** ladite ou chaque came (13, 15) est percée de plusieurs alésages (135, 155) répartis autour de son axe de rotation (X₁₃, X₁₅) autour de l'arbre d'entrée (11) dudit réducteur, **en ce que** chaque alésage reçoit un doigt d'actionnement (16) immobilisé sur ledit support (17) et **en ce qu'**une couronne (20) est solidaire en rotation des extrémités (168) desdits doigts (16) opposées audit support (17).

10. Réducteur selon l'une des revendications 6 à 9, **caractérisé en ce que** ledit ou chaque doigt d'actionnement (16) est immobilisé sur ledit support (17) au moyen d'une vis (18) s'étendant selon l'axe longitudinal dudit doigt et vissée dans ledit support (17) ou dans une pièce (12) solidaire dudit support.

11. Robot (R) comprenant une partie mobile (202) entraînée par un moteur (100) par l'intermédiaire d'un réducteur **caractérisé en ce que** ledit réducteur (1) est selon l'une des revendications 6 à 10.

## Claims

1. A method of fabricating an epicycloidal reducer (1) including at least one circular cam (13, 15) having an outer peripheral edge (133, 153) provided with a first set of teeth (134, 154) suitable for co-operating with a stationary second set of teeth (141) in which the number (N₂) of teeth is different from the number (N₁) of teeth in the first set, said cam being pierced by at least one first bore (135, 155) for receiving a drive finger (16) held stationary in a second bore (176) formed in a support (17) secured to an outlet shaft (12) of said reducer, the method being **characterized in that** it includes a step consisting in:
a) machining (F₂) at least partially in a single operation said first and second bores (135, 155; 176) in alignment (X₂) with each other.

2. A method according to claim 1, **characterized in that** it includes steps consisting in:
b) pressing said cam (13, 15) against said support (17) prior to step a); and
c) subjecting said cam and said support as pressed one against the other in this way to a clamping force (F₁) at least during step a).

3. A method according to claim 2, **characterized in that** during step c) said cam (15) and said support (17) have surfaces (157/177) pressing against each other in the zone in which said bores (135, 155, 176) are machined (F₂) and, optionally, two adjacent cams (13, 15) have surfaces (135/156) pressing against each other in said zone.

4. A method according to any preceding claim, **characterized in that** during step a), said bores (135, 155, 176) are machined to the same diameter (D).

5. A method according to any preceding claim, for fabricating a reducer including a plurality of cams (13, 15) each provided with at least one first bore (135, 155), the method being **characterized in that** during step a), the first bores (135, 155) of all of the cams (13, 15) are machined together with the corresponding second bore (176) of said support (17).

6. An epicycloidal reducer (1) including at least one circular cam (13, 15) having an outer peripheral edge (133, 153) provided with a first set of teeth (134, 154) suitable for co-operating with a stationary second set of teeth (141) in which the number (N₂) of teeth is different from the number (N₁) of teeth in the first set, said cam being pierced by at least one first bore (135, 155) for receiving a drive finger (16) held stationary in a second bore (176) formed in a support (17) secured to an outlet shaft (12) of said reducer, the reducer being **characterized in that** said first and second bores (135, 155, 176) are identical in diameter (D).

7. A reducer according to claim 6, **characterized in that** said finger (16) is stepped and comprises two portions (161, 162) of different diameters (D₁, D₂), a first portion (161) having a diameter (D₁) substantially equal to the diameter (D) of said bores (135, 155, 176) and being received in a bore (176) of said support (17), while a second portion (162) of diameter (D₂) smaller than the diameter of the first portion is received in a bore (135, 155) of said or of each cam (13, 15).

8. A reducer according to claim 7, **characterized in that** it includes at least two cams (13, 15) that are eccentric in opposition about the axis (X₁) of the inlet shaft (11) of the reducer, and **in that** the diameter (D) of said bores (135, 155, 176) is substantially equal to the sum of the diameter (D₂) of the second portion (162) of said finger (16) plus twice the eccentricity (e) of said cams.

9. A reducer according to any one of claims 6 to 8, **characterized in that** said or each cam (13, 15) is pierced by a plurality of bores (135, 155) distributed around its axis of rotation (X₁₃, X₁₅) about the inlet shaft (11) of said reducer, **in that** each bore receives a drive finger (16) held stationary on said support (17), and **in that** a ring (20) is constrained to rotate with the ends (168) of said fingers (16) that are opposite from said support (17).

10. A reducer according to any one of claims 6 to 9, **characterized in that** said or each drive finger (16) is held stationary on said support (17) by means of a screw (18) extending along the longitudinal axis of said finger and screwed into said support (17) or into a part (12) that is secured to said support.

11. A robot (R) including a moving portion (202) driven by a motor (100) via a reducer, the robot being **characterized in that** said reducer (1) is according to any one of claims 6 to 10.

## Patentansprüche

1. Verfahren zum Herstellen eines epizykloidischen Getriebes (1), mindestens eine kreisförmige Nockenscheibe (13, 15) umfassend, deren äußerer peripherer Rand (133, 153) mit mindestens einer ersten Verzahnung (134, 154) versehen ist, die geeignet ist, mit einer zweiten feststehenden Verzahnung (141) zusammenzuarbeiten, deren Zähnezahl (N₂) unterschiedlich zu der der ersten Verzahnung (N₁) ist, wobei die Nockenscheibe von mindestens einer ersten Bohrung (135, 155) zur Aufnahme eines Betätigungsfingers (16) durchgriffen wird, der in einer zweiten Bohrung (176) festgelegt ist, die in einem Träger (17) eingearbeitet ist, der mit einer Ausgangswelle (12) des Getriebes verbunden ist, **dadurch gekennzeichnet, dass** es einen Schritt umfasst, der darin besteht:
a) - mindestens teilweise in einem selben Vorgang die erste (135, 155) und die zweite Bohrung (176) in Ausrichtung (X₂) zueinander zu bearbeiten (F₂).

2. Verfahren nach Anspruch 1, **dadurch gekennzeichnet, dass** es Schritte umfasst, die darin bestehen:
b) - die Nockenscheibe (13, 15) gegen den Träger (17) vor dem Schritt a) anzuordnen und
c) - die Nockenscheibe und den Träger, die so gegeneinander liegen, zumindest während des Schritts a) einer Spannkraft (F₁) zu unterwerfen.

3. Verfahren nach Anspruch 2, **dadurch gekennzeichnet, dass** während des Schritts c) die Nockenscheibe(15) und der Träger (17) in Flächenabstützung (157/177) in der Zone sind, in der die Bohrungen (135, 155, 176) bearbeitet werden (F₂), und gegebenenfalls zwei benachbarte Nockenscheiben (13, 15) in Flächenabstützung (136/156) in der Zone sind.

4. Verfahren nach einem der vorhergehenden Ansprüche, **dadurch gekennzeichnet, dass** bei dem Schritt a) die Bohrungen (135, 155, 176) zu demselben Durchmesser (D) bearbeitet sind.

5. Verfahren nach einem der vorhergehenden Ansprüche für die Herstellung eines Getriebes, das mehrere Nockenscheiben (13, 15) umfasst, die jede mit mindestens einer ersten Bohrung (135, 155) versehen sind, **dadurch gekennzeichnet, dass** bei dem Schritt a) die ersten Bohrungen (135, 155) aller Nockenscheiben (13, 15) mit der zweiten korrespondierenden Bohrung (176) des Trägers bearbeitet werden.

6. Epizykloidisches Getriebe (1), mindestens eine kreisförmige Nockenscheibe (13, 15) umfassend, deren äußerer Umfangsrand (133, 153) mit einer ersten Verzahnung (134, 154) versehen ist, die geeignet ist, mit einer zweiten feststehenden Verzahnung (141) zusammenzuarbeiten, deren Zähnezahl (N₂) unterschiedlich zu der der ersten Verzahnung (N₁) ist, wobei die Nockenscheibe von mindestens einer ersten Bohrung (135, 155) zur Aufnahme eines Betätigungsfingers (16) durchgegriffen wird, der in einer zweiten Bohrung (176) festgelegt ist, die in einem mit einer Ausgangswelle (12) des Getriebes verbundenen Träger (17) angeordnet ist, **dadurch gekennzeichnet, dass** die erste (135, 155) und die zweite Bohrung (176) identische Durchmesser (D) aufweisen.

7. Getriebe nach Anspruch 6, **dadurch gekennzeichnet, dass** der Finger (16) zweistufig ausgebildet ist und zwei Teile (161, 162) mit unterschiedlichen Durchmessern (D₁, D₂) umfasst, wobei ein erster Teil (161) einen Durchmesser (D₁) im wesentlichen gleich dem Durchmesser (D) der Bohrungen (135, 155, 176) aufweist und in einer Bohrung (176) des Trägers (17) aufgenommen ist, während ein zweiter Teil (162) mit einem Durchmesser (D₂) kleiner als der Durchmesser des ersten Teils in einer Bohrung (135, 155) der oder jeder Nockenscheibe (135, 155) aufgenommen ist.

8. Getriebe nach Anspruch 7, **dadurch gekennzeichnet, dass** es mindestens zwei Nockenscheiben (13, 15) umfasst, die entgegengesetzt in Bezug auf die Achse (X₁) der Eingangswelle (11) des Getriebes versetzt sind und dass der Durchmesser (D) der Bohrungen (135, 155, 176) im wesentlichen gleich der Summe des Durchmessers (D₂) des zweiten Teils (162) des Fingers (16) und zweimal der Exzentrizität (2) der Nockenscheiben ist.

9. Getriebe nach einem der Ansprüche 6 bis 8, **dadurch gekennzeichnet, dass** die oder jede Nockenscheibe (13, 15) von mehreren Bohrungen (135, 155) durchgriffen wird, die um ihre Drehachse (X₁₃, X₁₅) um die Eingangswelle (11) des Getriebes herum verteilt sind, dass jede Bohrung einen Betätigungsfinger (16) aufnimmt, der an dem Träger (17) festgelegt ist und dass ein Kranz (20) drehfest mit den Enden (168) der Finger (16) entgegengesetzt zum Träger (17) verbunden ist.

10. Getriebe nach einem der Ansprüche 6 bis 9, **dadurch gekennzeichnet, dass** der oder jeder Betätigungsfinger (16) an dem Träger (17) mittels einer Schraube (18) festgelegt ist, die sich gemäß einer Längsachse des Fingers erstreckt und in den Träger (17) oder in ein mit dem Träger verbundenes Teil (12) geschraubt ist.

11. Roboter (R), ein bewegliches Teil (202) umfassend, das von einem Motor (100) über ein Getriebe angetrieben wird, **dadurch gekennzeichnet, dass** das Getriebe (1) eines nach den Ansprüchen 6 bis 10 ist.
